Europäisches Patentamt

European Patent Office

Office européen des brevets

(11) Veröffentlichungsnummer: **0 453 859 A2**

# (12) EUROPÄISCHE PATENTANMELDUNG

(21) Anmeldenummer: 91105574.7

(22) Anmeldetag: 09.04.91

(51) Int. Cl.5: **B29C 33/72**, B29C 45/17,
B29C 47/08, B08B 7/00,
//B29K9:06,B29K103:04

(30) Priorität: 21.04.90 DE 4012798

(43) Veröffentlichungstag der Anmeldung:
30.10.91 Patentblatt 91/44

(84) Benannte Vertragsstaaten:
BE DE ES FR GB IT NL

(71) Anmelder: BAYER AG

W-5090 Leverkusen 1 Bayerwerk(DE)

(72) Erfinder: Schumann, Werner, Dipl.-Ing.
Quellenweg 34
W-5024 Pulheim(DE)
Erfinder: Tischer, Werner, Dipl.-Ing.
Am Norfbach 9
W-4047 Dormagen 11(DE)
Erfinder: Brennig, Werner
Hasenpfad 6
W-4047 Dormagen 11(DE)

(54) Reinigung von Vorrichtungen für die Herstellung und Verarbeitung von Kunststoffen.

(57) Mittel zur Reinigung von Kunststoffverarbeitungsmaschinen, bestehend aus oder enthaltend ein pulverförmiges, durch Fällung von Magnesiumsulfat oder Natriumphosphat aus einem Latex gewonnenes Acrylnitril/Butadien/Styrolpolymerisat mit einem Wassergehalt von 20 bis 80 Gew.-%, sowie ein Verfahren zur Reinigung von Kunststoffverarbeitungsmaschinen, indem man sie mit diesem Reinigungsmittel beaufschlagt.

EP 0 453 859 A2

Kunststoffe, insbesondere thermoplastische Kunststoff-Formmassen, werden meist auf kontinuierlich arbeitenden Vorrichtungen hergestellt und verarbeitet. Solche Vorrichtungen sind z.B. Extruder, Kneter, Spritzgußmaschinen. Häufig müssen solche Vorrichtungen von der Herstellung oder Verarbeitung einer Formmasse auf eine andere umgestellt werden. Dazu ist erforderlich, das zuerst hergestellte Material restlos aus den Vorrichtungen zu entfernen, denn etwa noch vorhandene Reste würden das neue Material verunreinigen. Diese Umstellung der Produktion wird im folgenden als Reinigung bezeichnet.

Zur Reinigung von Vorrichtungen der in Rede stehenden Art kann man sie im allgemeinen nicht demontieren, mechanisch säubern und wieder montieren, weil dies viel zu lange dauert. Deshalb beaufschlagt man die Vorrichtungen einfach mit dem neuen Material und verwirft das Produkt solange es noch altes Material enthält. Dies ist natürlich mit erheblichem Zeit-, Energie- und Rohstoffverlust verbunden.

Es wurde gefunden, daß die Reinigung beim Umstellen solcher Vorrichtungen mit erheblich geringeren Zeitenergie- und Rohstoffverlusten gelingt, wenn man statt oder zusammen mit dem neuen zu verarbeitenden Kunststoff ein pulverförmiges Acrylnitril/Butadien/Styrolpolymerisat mit hohem Wassergehalt aufgibt. Es werden dann in kürzester Zeit Reste des zuerst bearbeiteten Kunststoffs aus den Vorrichtungen ausgetragen, so daß die Umstellung auf einen neuen Kunststoff sehr schnell möglich ist.

Gegenstand der Erfindung ist somit ein Mittel zur Reinigung von Kunststoffverarbeitungsmaschinen, bestehend aus oder enthaltend ein pulverförmiges, durch Fällung mit Magnesiumsulfat oder Natriumphosphat aus einem Latex gewonnenes Acrylnitril/Butadien/Styrolpolymerisat mit einem Wassergehalt von 20 bis 80 Gew.-%.

Ein weiterer Gegenstand ist ein Verfahren zur Reinigung von Kunststoffverarbeitungsmaschinen, das dadurch gekennzeichnet ist, daß man die Maschine mit einem pulverförmigen, wasserhaltigen Acrylnitril/Butadien/Styrolpolymerisat beaufschlagt.

Das erfindungsgemäße Reinigungsmittel kann hergestellt werden, indem man einen Acrylnitril/Butadien/Styrol-Kunststofflatex mit waßrigen Lösungen von Magnesiumsulfat und/oder Natriumphosphat bei erhöhter Temperatur koaguliert und das Koagulat abtrennt. Es wird dabei ein hochwasserhaltiges Pulver erhalten, das direkt verwendet werden kann. Es kann zusätzlich noch weitere Stoffe wie Alkalisierungsmittel, Abrasionspartikel, Emulgatoren, Tenside enthalten. Acrylnitril/Butadien/Styrol-Kunststoff im vorliegenden Zusammenhang ist bevorzugt ein Pfropfpolymerisat von Acrylnitril und Styrol auf Polybutadien, das durch Emulsionspolymerisation gewonnen wurde. Das Material enthält bevorzugt keine üblichen Kunststoffadditive wie Gleitmittel, Stabilisatoren, Pigmente, Füllstoffe, Farbstoffe.

Zur Reinigung einer der in Rede stehenden Vorrichtungen gibt man zunächst das erfindungsgemäße Reinigungsmittel, meist bereits zusammen mit dem neuen zu verarbeitenden Kunststoff, ein, wobei die Maschineneinstellungen und Verarbeitungsbedingungen unverändert bleiben können.

Man kann z.B. dem neuen Kunststoff das erfindungsgemäße Reinigungsmittel in Mengen von bevorzugt 1 bis 10 Gew.-% zufügen und zunächst ein solches Gemisch der zu reinigenden Vorrichtung zuführen. Wenn die Vorrichtung selbst keinen Druck entwickelt (z.B. Entgasungsextruder), muß man kurzfristig einen Druckanstieg erzwingen (beim Entgasungsextruder durch Verschließen des Entspannungsstutzens).

Das erfindungsgemäße Reinigungsmittel beruht auf einer ABS Basis. Es ist aber praktisch in jedem Fall einer Umstellung der Produktion anwendbar, auch dann, wenn weder das auslaufende noch das beginnende Material ein ABS ist Beispiele für Kunststoffe, von denen die Vorrichtungen gereinigt werden können, sind z.B. ABS, Polyamid, Polycarbonat, Polyolefine (Polyethylen, Polypropylen), Polymethylmethacrylat, Polyphenylensulfid, Polystyrol, Polyvinylchlorid, Styrol/Acrylnitril-Copolymerisat und Mischungen daraus.

Die Kunststoffe können Füllstoffe enthalten, müssen es aber nicht. Um die Korrosionsgefahr von metallischen Maschinenteilen zu verringern, stellt man zweckmäßig das Reinigungsmittel auf einen pH von 7 bis 14, z.B. dadurch, daß man es mit alkalischen Fällmitteln ausfällt.

Die Anwendung des beschriebenen Reinigungsmittels erfolgt über die Herstellung einer Mischung aus Reinigungsmittel mit einem Wassergehalt von 20 bis 80 Gew.-%, vorzugsweise 40 bis 60 Gew.-%, und dem nachfolgend auf der Maschine zu verarbeitenden Kunststoff-Material. Dabei wird die Mischung durch einfaches Zugeben von mindestens 0,5 Gew.-% des Reinigungsmittels, vorzugsweise 1 Gew.-% bis 10 Gew.-%, mit dem neuen zu verarbeitenden Kunststoff-Material durch manuelles oder maschinelles Mischen hergestellt. Diese Mischung wird in die Einfüllvorrichtung der Maschine eingetragen und unter unveränderten Maschineneinstellungen verarbeitet.

Beispiel 1

10 kg des Latex eines Pfropfpolymerisats von Styrol und Acrylnitril auf Polybutadien (wie er bei der großtechnischen Herstellung anfällt) wurde mit einer 15 %igen Magnesiumsulfatlösung in Wasser gefällt. Das Koagulat wurde abfiltriert. Sein Wassergehalt war 50 Gew.-%. Dieses Material wurde ohne weitere Behandlung direkt als Reinigungsmittel eingesetzt.

Beispiel 2

Das Reinigungsmittel gemäß Beispiel 1 wurde bei einem Farbwechsel von Acrylnitril-Butadien-Styrol (ABS) schwarz auf Polycarbonat (PC) natur auf einer Spritzgußmaschine von 20 t Schließkraft getestet. Dabei wurden 1 kg PC mit 10 g Reinigungsmittel vermischt (entspricht 1 Gew.-%, bezogen auf das nachfolgend zu verarbeitende Polycarbonat) und über die Einfüllvorrichtung in die Spritzgußmaschine bei einer Schneckendrehzahl von 250 U/min eingetragen. Die in der Maschine befindliche schwarze ABS-Schmelze wurde in weniger als fünf Minuten ins Freie gespritzt. Anschließend konnten transparente PC-Prüfkörper, frei von jeglichen Farbschlieren oder Vorprodukt-Einschlüssen, hergestellt werden.

Beispiel 3

Weitere Farbwechsel wurden wie in Beispiel 2 beschrieben auf Spritzgußmaschinen mit 50 bis 150 t Schließkraft durchgeführt. Entsprechend der Maschinengröße mußten die Mengen an Reinigungsmischung erhöht werden. Bei einer Maschine mit 150 t Schließkraft benötigte man 2 kg Kunststoff-Granulat und 20 g Reinigungsmittel (1 Gew.-%). Auch hier gelangen bei allen Versuchen in kürzester Zeit Polymertyp- und Farbwechsel.

Beispiel 4

Versuche an Extrudern zeigten gleich gute Ergebnisse, wobei bei Entgasungsextrudern erst die Entspannungsstutzen verschlossen werden mußten.
Die Versuche wurden auf folgenden Spritzgußmaschinen und Extrudern durchgeführt:
Arburg 221-55-250
Schnecken: ⌀ 25
Materialaufwand vorher: 2 kg Spülware + Rozylit
Zeitaufwand vorher: 30 Min.
mit Reinigungsmittel: 0,5 kg
Zeitaufwand: 7 Min.
Arburg 270-210-500
Schnecken: ⌀ 30
Materialaufwand vorher: 3 kg Spülware + Rozylit
Zeitaufwand vorher: 40 Min.
mit Reinigungsmittel: 1 kg
Zeitaufwand: 10 Min.
Krauss-Maffai 160-600 A
Schnecken: ⌀ 45
Materialaufwand vorher: 10 kg Spülware + Rozylit
Zeitaufwand vorher: 50 Min.
mit Reinigungsmittel: 2 kg

Zeitaufwand: 15 Min.
Bypass-Rheograph
Schnecke: ⌀ 18
Materialaufwand vorher: 2 kg Spülware + Rozylit
Zeitaufwand vorher: 30 Min.
mit Reinigungsmaterial: 0,5 kg
Zeitaufwand: 10 Min.
Stork Extruder
Schnecke: ⌀ 20
Materialaufwand vorher: 3kg Spülware + Rozylit
Zeitaulwand vorher: 45 Min.
mit Reinigungsmaterial: 1 kg
Zeitaufwand: 10 Min.

**Patentansprüche**

1.  Mittel zur Reinigung von Kunststoffverarbeitungsmaschinen, bestehend aus oder enthaltend ein pulverförmiges, durch Fällung mit Magnesiumsulfat oder Natriumphosphat aus einem Latex gewonnenes Acrylnitril/Butadien/Styrolpolymerisat, mit einem Wassergehalt von 20 bis 80 Gew.-%.

2.  Verfahren zur Reinigung von Kunststoffverarbeitungsmaschinen, dadurch gekennzeichnet, daß man die Maschine mit einem pulverförmigen, wasserhaltigen Acrylnitril/Butadien/Styrolpolymerisat beaufschlagt.